# EUROPÄISCHE PATENTSCHRIFT

(11) **EP 0 744 532 B1**
(45) Veröffentlichungstag und Bekanntmachung des Hinweises auf die Patenterteilung: **03.03.1999**
(21) Anmeldenummer: 95107777.5
(22) Anmeldetag: 22.05.1995
(51) Int. Cl.: F01L 1/26, F01L 1/344, F02D 13/02, F01L 1/44

(54) **Mehrzylindrige Brennkraftmaschine**
Multicylinder engine
Moteur multicylindre

(43) Veröffentlichungstag der Anmeldung: 27.11.1996
(73) Patentinhaber: Dr.Ing.h.c. F. Porsche Aktiengesellschaft, 70435 Stuttgart (DE); REGIE NATIONALE DES USINES RENAULT S.A., 92109 Boulogne Billancourt Cédex (FR)
(72) Erfinder: Bier, Manfred, D-71735 Eberdingen (DE)

(56) Entgegenhaltungen:
- EP-A- 0 338 729
- EP-A- 0 529 639
- EP-A- 0 594 463
- DE-A- 4 332 616
- US-A- 5 230 320

## Beschreibung

Die Erfindung betrifft eine mehrzylindrige Brennkraftmaschine nach dem Oberbegriff des Patentanspruchs 1.

Bei einer bekannten Brennkraftmaschine der obigen Gattung - DE 36 00 408 - sind drei Einlaßventile vorgesehen, zu denen jeweils ein Saugkanal führt. Die Saugkanäle weisen unterschiedliche Durchmesser und Längen auf, und jeder Saugkanal ist mit einer Steuerklappe versehen. Außerdem sind die Steuerzeiten der Einlaßventile variierbar ausgeführt. Bei dieser Ausführung ist der Aufwand für die Vielzahl der Steuerklappen und unterschiedlichen Saugkanäle sowie die offensichtliche komplexe Art der Veränderung der Steuerzeiten der Einlaßventile enorm hoch.

Aufgabe der Erfindung ist es, bei vertretbarem Einsatz von Mitteln eine hochwirksame Betätigung der Steuerklappen im Ansaugkanal und Einstellung der Steuerzeiten der Einlaßventile zu verwirklichen dergestalt, daß der Betrieb der Brennkraftmaschine, insbesondere bezüglich Abgasemission, Kraftstoffverbrauch, Leistung und Drehmomemt optimiert ist.

Erfindungsgemäß wird diese Aufgabe durch die Merkmale des Patentanspruchs 1 gelöst.

Die mit der Erfindung hauptsächlich erzielten Vorteile sind darin zu sehen, daß der Betrieb der Brennkraftmaschine über den gesamten Arbeitsbereich optimiert ist, was sich günstig auf den stabilen Leerlauf, die Abgasemission, den Kraftstoffverbrauch sowie die Leistung und das Drehmoment der besagten Brennkraftmaschine auswirkt. Dabei erfolgt die Ansteuerung der Steuerklappen des einen Saugkanals und die Einstellung der Steuerzeiten - früh oder spät - der Einlaßventile über leicht realisierbare Kennfeldbereiche eines Drehmoment-Drehzahl-Diagramms. Die Vorkehrungen für die Steuerung des Saugkanals sind einfach darzustellen, da pro Zylinder nur zwei Saugkanäle und lediglich eine Steuerklappe erforderlich sind. Sinngemäß trifft dies auch für die Einstellung der Steuerzeiten der Einlaßventile zu, wofür eine übliche Stellvorrichtung verwendbar ist. Diese ist auch unter dem Begriff "Axialversteller" bekannt, wie er er beispielsweise in der EP 0 147 209 A2 beschrieben ist.

In der Zeichnung wird die Erfindung mittels mehrerer Figuren verdeutlicht, die nachstehend näher beschrieben sind. Es zeigt:

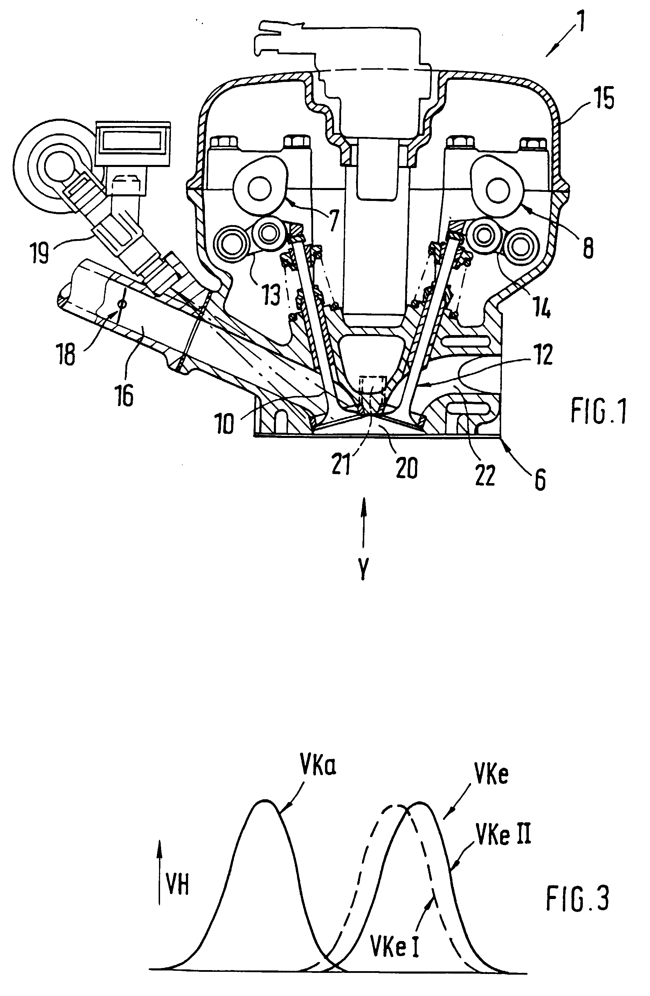

- Fig. 1: einen Teilquerschnitt einer Brennkraftmaschine im Bereich eines Zylinderkopfes,

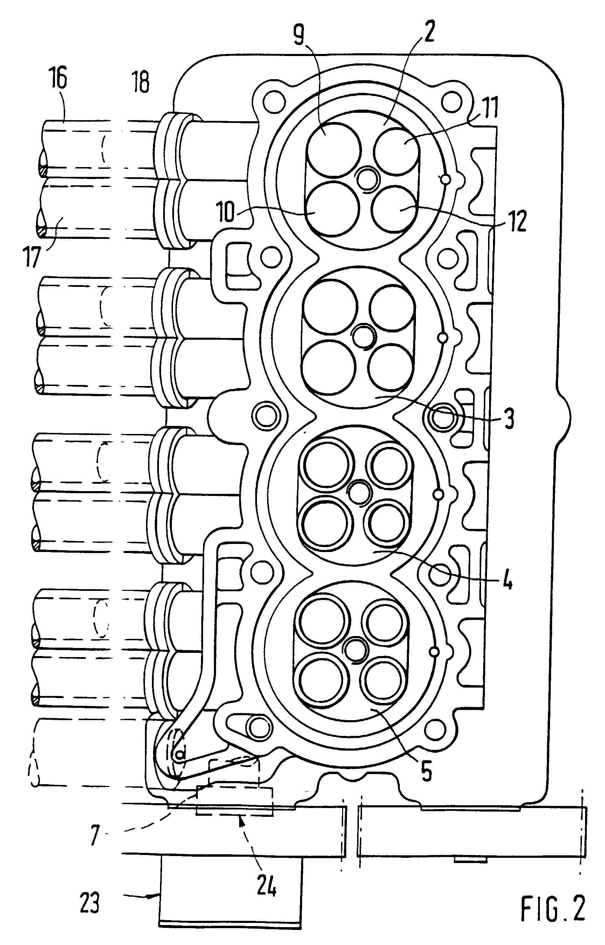

- Fig. 2: eine Ansicht in Pfeilrichtung Y der Fig. 1,
- Fig. 3: ein Diagramm der Steuerzeiten der Einlaßventile und der Auslaßventile der Brennkraftmaschine,
- Fig. 4: ein Drehmoment-Drehzahl-Diagramm der Brennkraftmaschine,
- Fig. 5: eine erläuternde Darstellung für das Diagramm gem. Fig. 4.

Eine Brennkraftmaschine 1 der Viertakt-Bauart - Hubraum z.B. zwischen 800 und 1100 cm² - umfaßt vier Zylinder 2, 3, 4, 5 und oberhalb von diesen einen Zylinderkopf 6 mit einer Einlaßnockenwelle 7 und einer Auslaßnockenwelle 8. Pro Zylinder sind zwei Einlaßventile 9, 10 und zwei Auslaßventile 11, 12 vorgesehen. Die Nockenwellen 7, 8 betätigen die Ventile 9, 10, 11, 12 unter Vermittlung von Rollenschlepphebeln 13, 14. Mit 15 ist eine Haube bezeichnet, die den Zylinderkopf 6 abdeckt.

Zu den Einlaßventilen 9, 10 führen jeweils zwei getrennte Saugkanäle 16, 17, wobei im Ausführungsbeispiel nur in einem Saugkanal, z.B. dem Saugkanal 16, eine Steuerklappe 18 vorgesehen ist. Für die Erfüllung spezieller Funktionen der Brennkraftmaschine ist jedoch auch denkbar, in beiden Saugkanälen Steuerklappen vorzusehen. Die Kraftstoffzufuhr erfolgt mittels Einspritzdüsen 19. Das Kraftstoff-Luftgemisch, das über die Einlaßventile 9, 10 in einen Brennraum gelangt und dort mit einer zentral angeordneten Zündkerze 21 gezündet wird, tritt als Abgas bei geöffneten Auslaßventilen 11, 12 über den Auslaßkanal 22 in den nicht näher gezeigten Auspufftrakt der Brennkraftmaschine 1 aus.

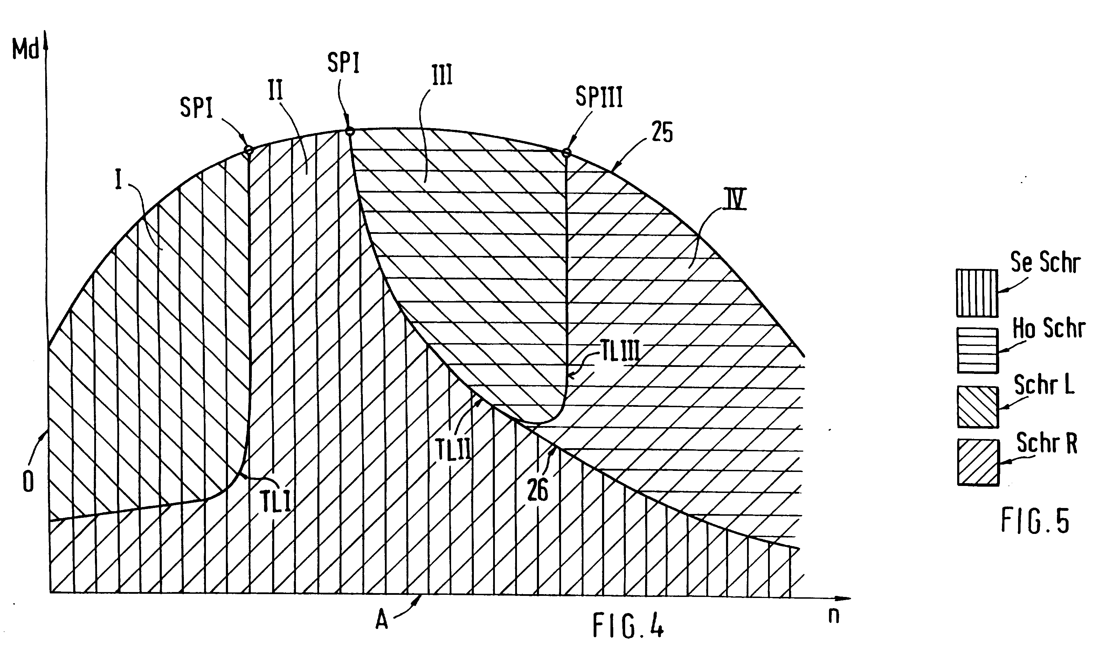

Die Steuerzeiten der Einlaßventile 9, 10 sind relativ zu den Steuerzeiten der Einlaßventile 11, 12, einstellbar ausgebildet, was die Fig. 3 verdeutlicht. Darin gibt die Ventilerhebungskurve VKa die Steuerzeiten der Auslaßventile 11, 12 und die Ventilerhebungskurve VKe die Steuerzeiten der Einlaßventile 9, 10 wieder; VH ist der Ventilhub. Dabei ist ersichtlich, daß die Steuerzeiten der Ventilerhebungskurve VKe einstellbar sind; die gestrichelte Ventilerhebungskurve VKeI ist in Richtung früh, die durchgezogene Ventilerhebungskurve VKeII in Richtung spät eingestellt ist. In diesem Zusammenhang ist unter "früh" frühes Einlaßöffnen und Schließen und unter "spät" spätes Einlaßöffnen und Schließen zu verstehen.

Die Einstellung der Steuerzeiten der Einlaßventile 9, 10 erfolgt durch Veränderung der relativen Drehlage der Einlaßnockenwelle 7 zur Auslaßnockenwelle 8. Hierfür dient eine Stelleinrichtung 23, wie sie in etwa in der EP 0 147 209 A2 beschrieben ist. Die Stelleinrichtung 23 ist außerhalbe des Zylinderkopfes 6 an einer Stirnseite 24 der Einlaßnockenwelle 7 angeordnet.

In Fig. 4 ist das Drehmoment-Drehzahl-Diagramm der Brennkraftmaschine 1 dargestellt, wobei auf der Ordinate 0 das Drehmoment Md und auf der Abszisse A die Drehzahl n aufgetragen ist. Mit 25 ist eine Vollastlinie bezeichnet, unterhalb welcher sich Kennfeldbereich I, II, III und IV erstrecken. Der Kennfeldbereich I wird durch einen Teil der Vollastlinie 25 einen Teil der Ordinate 0 und eine winkelförmige Trennlinie TLI begrenzt, wobei letztere bei einem ersten Schaltpunkt SpI auf die Vollastlinie 25 stößt. Der Kennfeldbereich II wird durch die Trennlinie TLI durch die Abszisse A einen Teil der Vollastlinie 25 und eine Trennlinie TLII, die teilweise die Drossellinie 26 zwischen den Saugkanälen 16, 17 wiedergibt; ein zweiter Schaltpunkt ist mit SpII angegeben. Der Kennfeldbereich III wird durch einen Teil der Vollastlinie 25 und eine dritte Trennlinie TLIII begrenzt, die bei Schaltpunkt SpII beginnt, abschnittsweise entlang der Drossellinie 26 verläuft und dann bei einem dritten Schaltpunkt SpIII auf die Vollastlinie 25 stößt. Schließlich wird der Kennfeldbereich IV von einem Teil der Vollastlinie 25 einem Teil der Trennlinie TLIII und einem Teil der Drossellinie 26 definiert. Die Lage der Schaltpunkte SpI, SpII und SpIII sowie die Form der Trennlinien TLI, TLII und TLIII wird empirisch oder rechnerisch ermittelt.

Für die sinnfällige Darstellung der Steuerfunktionen der Steuerklappe und der Steuerzeiten der Einlaßventile 9, 10 im Drehmoment-Drehzahl-Diagramm sind die Kennfeldbereiche I, II, III und IV mit entsprechenden Schraffuren versehen, die gemäß Fig. 5 nachstehende Bedeutung haben:
Senkrechte Schraffur - Se Schr - Ein Saugkanal geschlossen
Horizonale Schraffur - Ho Schr - Beide Saugkanäle geöffnet
Schräge Schraffur - SchrL - Einlaßnockenwelle früh,
von oben links nach unten rechts
Schräge Schraffur - SchrR - Einlaßnockenwelle spät,
von oben rechts nach unten links.

Beim Betrieb der Brennkraftmaschine 1 ergeben sich in Abhängigkeit der definierten Kennfeldbereiche I, II, III und IV folgende Funktionen:
■ Im ersten Kennfeldbereich I ist der erste Saugkanal 17 geöffnet und der zweite Saugkanal 16 geschlossen, wobei die Steuerzeiten der Einlaßventile 9, 10 in Richtung früh eingestellt sind.
■ Im zweiten Kennfeldbereich II ist der erste Saugkanal 17 geöffnet und der zweite Saugkanal geschlossen, wobei die Steuerzeiten der Einlaßventile 9, 10 in Richtung spät eingestellt sind.
■ Im dritten Kennfeldbereich III sind beide Saugkanäle 16, 17 geöffnet, wobei die Steuerzeiten der Einlaßventile 9, 10 in Richtung früh eingestellt sind.
■ Im vierten Kennfeldbereich IV sind beide Saugkanäle 16, 17 geöffnet, wobei die Steuerzeiten der Einlaßventile 9, 10 in Richtung spät eingestellt sind.

## Patentansprüche

1. Mehrzylindrige Brennkraftmaschine (1) der Hubkolbenbauart mit wenigstens zwei Einlaßventilen (9, 10) und einem Auslaßventil (11, 12) pro Zylinder, zwei in einem Zylinderkopf oberhalb der Zylinder angeordneten mit variablen Steuerzeiten arbeitenden Ventile betätigenden Nockenwellen (7, 8) und einer Sauganlage mit getrennten, zu den Einlaßventilen führenden Saugkanälen (16, 17), wovon zumindest in einem Saugkanal (16) eine Steuerklappe (18) vorgesehen ist, dadurch gekennzeichnet, daß die Steuerzeiten der Ventile (9, 10 und 11, 12) und die Durchströmung der Saugkanäle (16, 17) in Abhängigkeit von definierten Kennfeldbereichen (I, II, III und IV) eines Drehmoment-Drehzahl-Diagramms beeinflußt werden.

2. Mehrzylindrige Brennkraftmaschine nach Anspruch 1, dadurch gekennzeichnet, daß
■ in einem ersten Kennfeldbereich (I) der erste Saugkanal (17) geöffnet und der zweite Saugkanal (16) geschlossen ist, wobei die Steuerzeiten der Einlaßventile (9, 10) in Richtung früh eingestellt sind;
■ in einem zweiten Kennfeldbereich (II) der erste Saugkanal (17) geöffnet und der zweite Saugkanal (16) geschlossen ist, wobei die Steuerzeiten der Einlaßventile (9, 10) in Richtung spät eingestellt sind;
■ in einem dritten Kennfeldbereich (III) beide Saugkanäle (16, 17) geöffnet sind, wobei die Steuerzeiten der Einlaßventile (9, 10) in Richtung früh eingestellt sind;
■ in einem vierten Kennfeldbereich (IV) beide Saugkanäle (16, 17) geöffnet sind, wobei die Steuerzeiten der Einlaßventile (9, 10) in Richtung spät eingestellt sind.

3. Mehrzylindrige Brennkraftmaschine nach Anspruch 2, dadurch gekennzeichnet, daß die Einstellung der Steuerzeiten der Einlaßventile (9, 10) durch Veränderung der relativen Drehlage der Einlaßnockenwelle (7) gegenüber der Auslaßnockenwelle (8) erfolgt.

4. Mehrzylindrige Brennkraftmaschine nach den Ansprüchen 1 und 2, dadurch gekennzeichnet, daß nur in einem Saugkanal (16) eine Steuerklappe (18) angeordnet ist.

5. Mehrzylindrige Brennkraftmaschine nach den Ansprüchen 1 bis 4, dadurch gekennzeichnet, daß die Veränderung der relativen Drehlage der Einlaßnockenwelle (7) und die Betätigung der Steuerklappen (18) im Saugkanal (16) in Abhängigkeit von Last- und Drehzahl der Brennkraftmaschine erfolgt.

6. Mehrzylindrige Brennkraftmaschine nach Anspruch 3, dadurch gekennzeichnet, daß die Einlaßnockenwelle (7) zur Veränderung der relativen Drehlage mit einer Stellvorrichtung (23) zusammenwirkt.

7. Mehrzylindrige Brennkraftmaschine nach Anspruch 6, dadurch gekennzeichnet, daß die Stellvorrichtung (23) an einer Stirnseite (24) der Einlaßnockenwelle (7) angeordnet ist.

## Claims

1. A multiple-cylinder internal-combustion engine (1) of reciprocating-piston design with at least two intake valves (9, 10) and one exhaust valve (11, 12) *per* cylinder, two camshafts (7, 8) which are arranged in a cylinder head above the cylinders and actuate valves operating at variable control times, and an intake system with separate intake ports (16, 17) leading to the intake valves, a control flap (18) being provided at least in one intake port (16), **characterized in that** the control times of the valves (9, 10 and 11, 12) and the throughflow of the intake ports (16, 17) is controlled as a function of defined graph areas (**I, II, III** and **IV**) of a torque / speed diagram.

2. A multiple-cylinder internal-combustion engine according to Claim 1, **characterized in that**
■ in a first graph area (**I**) the first intake port (17) is opened and the second intake port (16) is closed, the control times of the intake valves (9, 10) being set in the advanced direction;
■ in a second graph area (**II**) the first intake port (17) is opened and the second intake port (16) is closed, the control times of the intake valves (9, 10) being set in the retarded direction;
■ in a third graph area (**III**) the two intake ports (16, 17) are opened, the control times of the intake valves (9, 10) being set in the advanced direction;
■ in a fourth graph area (**IV**) the two intake ports (16, 17) are opened, the control times of the intake valves (9, 10) being set in the retarded direction.

3. A multiple-cylinder internal-combustion engine according to Claim 2, **characterized in that** the control times of the intake valves (9, 10) are set by altering the relative rotational position of the intake camshaft (7) with respect to the exhaust camshaft (8).

4. A multiple-cylinder internal-combustion engine according to Claims 1 and 2, **characterized in that** a control flap (18) is arranged only in one intake port (16).

5. A multiple-cylinder internal-combustion engine according to Claims 1 to 4, **characterized in that** altering the relative rotational position of the intake camshaft (7) and actuating the control flaps (18) in the intake port (16) are carried out as a function of the load and rotational speed of the internal-combustion engine.

6. A multiple-cylinder internal-combustion engine according to Claim 3 **characterized in that** the intake camshaft (7) cooperates with an adjustment device (23) in order to alter the relative rotational position.

7. A multiple-cylinder internal-combustion engine according to Claim 6, **characterized in that** the adjustment device (23) is arranged on an end face (24) of the intake camshaft (7).

## Revendications

1. Moteur à combustion interne multicylindre (1) du type à piston alternatif comportant au moins deux soupapes d'admission (9, 10) et une soupape d'échappement (11, 12) par cylindre, deux arbres à cames (7, 8) disposés dans une culasse au-dessus des cylindres, actionnant des soupapes fonctionnant avec des temps de commande variables et un système d'aspiration avec des canaux d'aspiration (16, 17) séparés, menant aux soupapes d'admission, dans un canal d'aspiration (16) au moins un clapet de commande (18) étant prévu, caractérisé en ce que les temps de commande des soupapes (9, 10 et 11, 12) et l'écoulement à travers les canaux d'aspiration (16, 17) sont influencés en fonction de domaines de champ caractéristique (I, II, III et IV) définis d'un diagramme couple de rotation/vitesse de rotation.

2. Moteur à combustion interne multicylindre selon la revendication 1, caractérisé en ce que
- dans un premier domaine de champ caractéristique (I), le premier canal d'aspiration (17) est ouvert et le deuxième canal d'aspiration (16) est fermé, les temps de commande des soupapes d'admission (9, 10) étant réglés dans le sens « avance »;
- dans un deuxième domaine de champ caractéristique (II), le premier canal d'aspiration (17) est ouvert et le deuxième canal d'aspiration (16) est fermé, les temps de commande des soupapes d'admission (9, 10) étant réglés dans le sens « retard»;
- dans un troisième domaine de champ caractéristique (III), les deux canaux d'aspiration (16, 17) sont ouverts, les temps de commande des soupapes d'aspiration (9, 10) étant réglés dans le sens « avance »;
- dans un quatrième domaine de champ caractéristique (IV), les deux canaux d'aspiration (16, 17) sont ouverts, les temps de commande des soupapes d'aspirations (9, 10) étant réglés dans le sens « retard ».

3. Moteur à combustion interne multicylindre selon la revendication 2, caractérisé en ce que le réglage des temps de commande des soupapes d'admission (9, 10) s'effectue par variation de la position de rotation relative de l'arbre à cames d'admission (7) par rapport à l'arbre à cames d'échappement (8).

4. Moteur à combustion interne multicylindre selon les revendications 1 et 2, caractérisé en ce qu'un clapet de commande (18) est disposé seulement dans un canal d'aspiration (16).

5. Moteur à combustion interne multicylindre selon les revendications 1 à 4, caractérisé en ce que la variation de la position relative de l'arbre à cames d'admission (7) et l'actionnement des clapets de commande (18) dans le canal d'aspiration (16) s'effectuent en fonction de la charge et de la vitesse de rotation du moteur à combustion interne.

6. Moteur à combustion interne multicylindre selon la revendication 3, caractérisé en ce que l'arbre à cames d'admission (7) coopère avec un dispositif de réglage (23) en vue de la variation de la position de rotation relative.

7. Moteur à combustion interne multicylindre selon la revendication 6, caractérisé en ce que le dispositif de réglage (23) est disposé sur un côté frontal (24) de l'arbre à cames d'admission (7).
